# EUROPÄISCHE PATENTANMELDUNG

(11) **EP 1 915 035 A2**
(43) Veröffentlichungstag der Anmeldung: **23.04.2008**
(21) Anmeldenummer: 07405287.9
(22) Anmeldetag: 26.09.2007
(51) Int. Cl.: H05B 41/00

(54) **Verfahren und Vorrichtung zum Speisen einer Fluoreszenz-Lampe in einer Notleuchte**

(30) Priorität: 26.09.2006 CH 15292006
(71) Anmelder: Sander Elektronik AG, 5314 Kleindöttingen (CH)
(72) Erfinder: Noé, Michel, 6314 Unterägeri (CH); Schneider, Pierre, 5314 Kleindöttingen (CH)
(74) Vertreter: Frei Patent Attorneys

(57) **Zusammenfassung**

Beim Speisen einer Fluoreszenz-Lampe in einer Notleuchte geschieht eine Vorheizung der Lampe vor der Zündung: Während der Vorheizung wird die Fluoreszenz-Lampe durch die getrennte Steuerung der beiden Ausgangsrelais vom Eintakt-Sperrwandler einseitig getrennt. Durch eine Primär-Induktivität des Sperrwandlers und zusätzlich einen Transistor, eine Diode und einen Kondensator, die zusammen einen Hochsetzer bilden, wird Energie an eine Elektrode der Fluoreszenz-Lampe übertragen. Dadurch wird diese Elektrode vorgeheizt. Mit diesem Verfahren wird die Fluoreszenz-Lampe geschont und die nachfolgende Zündung im Notbetrieb vereinfacht. Mit der gleichen Schaltung bzw. dem gleichen Verfahren ist es möglich, die Vorheizung auch während des Notbetriebes intermittierend zu betreiben.

## Beschreibung

Die Erfindung bezieht sich auf das Gebiet der Ansteuerung von Fluoreszenzlampen, und insbesondere auf eine elektronische Schaltung und ein Verfahren zum Speisen einer Fluoreszenz-Lampe in einer Notleuchte gemäss dem Oberbegriff der entsprechenden unabhängigen Patentansprüche.

### STAND DER TECHNIK

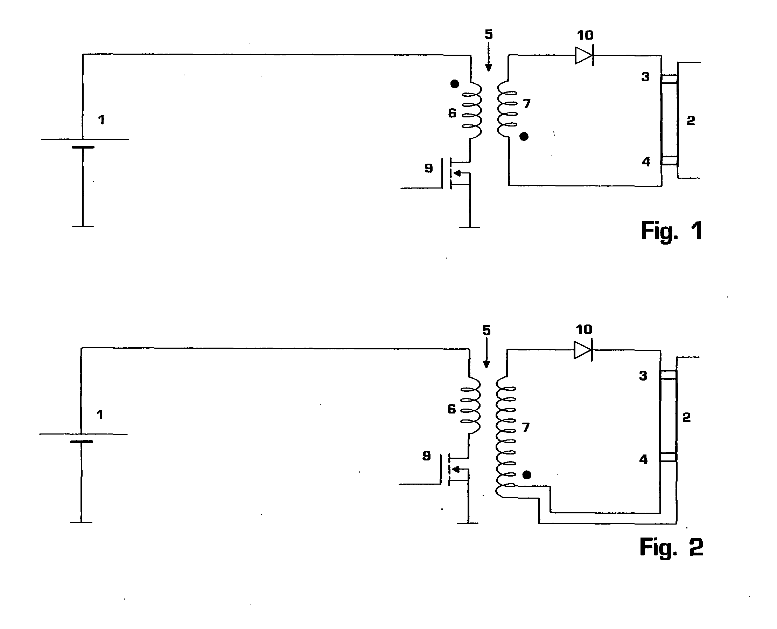

Beim Speisen einer Fluoreszenz-Lampe in einer Notleuchte stellt sich das Problem der Vorheizung der Lampe vor der Zündung im Notbetrieb. Dies wird im Folgenden anhand der Figur 1 illustriert: Der Konverter, welcher in einer Notleuchte mit Fluoreszenz-Lampe eingebaut wird, um das Leuchtmittel zu zünden, kann als Eintakt-Sperrwandler (Flyback converter) gebaut werden. In der **Figur 1** ist ein solcher Konverter gezeichnet. Der Transistor oder Schalttransistor 9 (Bipolar oder Mosfet) wird geschaltet. Der Strom fliesst aus einer Batterie 1 in der Primär-Wicklung 6 des Wandlers 5. Die Diode 10 verhindert den Stromfluss auf der Sekundär-Seite 7. Somit wird die Energie aus der Batterie 1 in der Induktivität Lp der Primär-Wicklung 6 gespeichert. Wenn der Schalttransistor 9 blockiert wird, steigt die Sekundär-Spannung bis der Strom in der Sekundär-Wicklung 7 fliessen kann. Sobald der Schalttransistor 9 wieder eingeschaltet wird, ist die Diode 10 blockiert, und die Energie kann wieder im Wandler gespeichert werden. Ein solcher Konverter ist allgemein bekannt, und wird seit mehr als 20 Jahren für die Notbeleuchtung angewendet.

Die Fluoreszenz-Lampe 2 weist eine erste Elektrode 3 und eine zweite Elektrode 4 auf. Die erste Elektrode 3 ist mit dem mit der Diode 10 verbundenen Anschluss des Konverters respektive Sperrwandlers 5, 9, 10 verbunden. Dieser Anschluss des Konverters 5, 9, 10 ist der obere oder positive Anschluss. Die Elektrode E2 ist mit dem anderen Anschluss des Konverters verbunden. Dieser Anschluss ist der untere oder negative Anschluss.

Der Nachteil einer solchen Lösung liegt darin, dass die zweite Elektrode 4, welche mit dem negativen Ende des Konverters verbunden ist, sehr schnell beschädigt wird. Da der Notbetrieb nur selten vorkommt, kann es sein, dass die schnelle Alterung der Fluoreszenz-Lampe kein Problem darstellt. Mit strengeren Anforderungen oder wenn die Notleuchte häufig getestet sein muss, ist es nötig die Fluoreszenz-Lampe zu schonen. Das heisst, dass die zweite Elektrode 4 vor der Zündung geheizt werden muss. Dieses Verfahren ist als Vorheizungsverfahren allgemein bekannt. Die meisten elektronischen Vorschaltgeräte (EVG) heizen beide Elektroden der Fluoreszenz-Lampe vor.

Bei der Anwendung von Eintakt-Sperrwandlem für die Notbeleuchtung gibt es bekannte Lösungen für die Vorheizung. In der **Figur 2** ist eine Lösung dargestellt, in welcher ein Strom ständig in die Elektrode fliesst, sowohl wenn der Transistor T als auch wenn die Diode D leitet. Der Nachteil einer solchen einfachen Lösung liegt darin, dass die Vorheizung nie abgeschaltet wird. Dadurch wird ein Teil der Batterie-Leistung im Notbetrieb als unnötige Heizleistung verloren. Ein anderer Nachteil liegt darin, dass die Vorheizung nicht genau kontrolliert werden kann. Ein schlechtes Vorheizung-Verfahren kann schädlicher sein, als gar kein Vorheizung-Verfahren.

Ein anderes Vorheizungsverfahren ist im deutschen Gebrauchsmuster G93 18 071.3 beschrieben, Die Vorheizung findet zwar nur statt, wenn der Transistor leitet, wird aber nicht nach der Zündung abgeschaltet. Sie ist ebenfalls nicht kontrollierbar.

Es sind für eine praktische Umsetzung noch weitere Anforderungen zu berücksichtigen: Wenn ein elektronisches Modul oder Notlichtelement für die Notbeleuchtung eingesetzt wird, ist es sinnvoll, alle Fluoreszenz-Lampentypen mit dem gleichen Modul betreiben zu können. Damit sind Produktions- und Lagerkosten am niedrigsten. Das heisst, dass das Vorheizungsverfahren für alle Lampentypen geeignet sein muss. Ein anderes Problem liegt darin, dass eine geeignete Vorheizung sehr viel Leistung in Anspruch nimmt. Die typische Vorheizungsleistung, welche von einem elektronischen Vorschaltgerät (EVG) erzeugt wird, beträgt ca. 8W während 250ms (pro Elektrode). Eine solche Leistung kann weit über die Leistung liegen, welche ein Notlichtelement im Notbetrieb an die Lampe liefert. Typisch fliessen Ströme von ca. 1A aus Batterien mit Batterie-Spannungen von 4,8V im Notbetrieb. Die Leistung beträgt damit nur 4,8W.

### DARSTELLUNG DER ERFINDUNG

Es ist deshalb Aufgabe der Erfindung, eine elektronische Schaltung und ein Verfahren zum Speisen einer Fluoreszenz-Lampe in einer Notleuchte der eingangs genannten Art zu schaffen, welche die oben genannten Nachteile behebt.

Diese Aufgabe lösen eine elektronische Schaltung und ein Verfahren zum Speisen einer Fluoreszenz-Lampe in einer Notleuchte mit den Merkmalen der Patentansprüche 1 und 6 und 9.

Durch eine solche elektronische Schaltung bzw. durch dieses Verfahren ist es möglich, die Fluoreszenz-Lampe einseitig vorzuheizen. Da die Zündung der Lampe durch den Sperrwandler immer einseitig erfolgt (wegen des Gleichstrombetriebs), ist es ausreichend, nur die untere Elektrode, d.h. die Elektrode aus welcher die Elektronen fliessen werden, vorzuheizen.

Vor der ersten Lampenzündung, d.h. mit einer kalten Lampe, wird eine so genannte ersten Vorheizung auf die Elektrode gebracht. Nach der ersten Zündung, d.h. wenn die Lampe im Notbetrieb leuchtet, wird vorzugsweise die Vorheizung weiterhin zeitlich intermittierend angesteuert. Die Vorheizung, welche während des Notbetriebes geregelt wird, wird "Vorheizung im Notbetrieb" genannt.

Während der ersten Vorheizung wird also die Fluoreszenz-Lampe durch die getrennte Steuerung der beiden Ausgangsrelais vom Eintakt-Sperrwandler einseitig abgetrennt. Die Primärseite des Eintakt-Sperrwandlers - der während der ersten Vorheizung wegen der einseitigen Abtrennung nicht in Betrieb ist - bildet zusammen mit dem Schalttransistor, einer Hochsetz-Diode und einem Hochsetz-Kondensator einen Hochsetzer. Der Ausgang des Hochsetzers, also der aufgeladene Pol des Hochsetz-Kondensators, ist mit dem unteren Anschluss des Sperrwandlers verbunden. Die im Hochsetzer bereitgestellte Leistung wird an die zweite Elektrode der Fluoreszenz-Lampe übertragen. Dazu fliesst ein Aufheizstrom durch die zweite Elektrode und durch einen Vorheiz-Transistor, der zur Steuerung des Aufheizstromes dient.

Mit diesem Verfahren wird die untere Elektrode aufgeheizt. Ihre Elektronen werden wärmer bzw. beweglicher. Dadurch wird die nachfolgende erste Zündung im Notbetrieb vereinfacht.

Während des Notbetriebes nach der ersten Zündung ist der obere Anschluss des Sperrwandlers mit der oberen Elektrode verbunden, so dass die Lampe wie üblich über den Sperrwandler gespeist wird. D.h. dass der Schalttransistor während einer bestimmten Dauer eingeschaltet wird. Dadurch fliesst der Strom aus der Batterie in den Wandler und die Energie wird in seiner Induktivität gespeichert. Dabei ist der Strom auf der Sekundärseite, d.h. in der Lampe, unterbrochen. Wenn der Schalttransistor abgeschaltet wird, erzeugt der Wandler eine Spannung auf der Sekundärseite, welche die Lampe wieder zünden muss. Diese Beschreibung beschreibt das übliche Verfahren eines Sperrwandlers für die Zündung einer Fluoreszenz-Lampe. Die üblichen Frequenzen liegen zwischen 10 und 50kHz, so dass der Schalttransistor typischerweise während 20 Mikrosekunden eingeschaltet ist.

Bei der Vorheizung im Notbetrieb, d.h. bei der Vorheizung welche nach der ersten Zündung gesteuert wird, wird der Vorheiz-Transistor weiterhin zeitweise angesteuert und zwar wird er kurz (d.h. typischerweise 2 bis 6 Mikrosekunden) vor der Abschaltung des Schalttransistors eingeschaltet und kurz (d.h. typischerweise 2 bis 6 Mikrosekunden) nach der Abschaltung des Schalttransistors abgeschaltet. Dadurch wird die untere Elektrode kurz vorgeheizt, genau dann, wenn die Lampe wieder gezündet werden muss bzw. wenn der Strom in die Lampe wieder fliessen muss.

Das Verfahren gemäss der Erfindung kann also in zwei verschiedenen Zuständen, beim ersten Zünden und während des Notbetriebes, durchgeführt werden. Bei beiden Betriebsarten wird die gleiche erfinderische Idee zum Vorheizen realisiert. Vorzugsweise werden beide Betriebsarten implementiert und im Betrieb der Lampe durchgeführt, es ist aber auch möglich, das Verfahren nur beim ersten Zünden oder nur während des Notbetriebs durchzuführen.

Das Verfahren gemäss der Erfindung verändert also die Konfiguration des Konverters vor und nach der ersten Zündung. Durch eine getrennte Steuerung der Relais, welche die Elektrodennanschlüsse wahlweise mit einer netzbetriebenen Speisung oder der batteriebetriebenen Notspeisung verbinden, und durch den Einsatz des zusätzlichen Vorheiz-Transistors kann der Ausgangsstrom des Konverters gezielt für die Vorheizung oder für die Zündung umgeleitet werden. Vor der ersten Zündung, d.h. während der ersten Vorheizung, wird die gesamte Leistung des Eintakt-Sperrwandlers auf die zweite Elektrode geleitet. Bei und nach der Zündung wird vorzugsweise die Vorheizung durch den Vorheiz-Transistor nur zeitweise eingeschaltet, die obere Elektrode mit dem Sperrwandler verbunden und die Leistung an die Lampe und nur für bestimmte kurze Perioden für die Vorheizung der unteren Elektrode geliefert.

Das Umschalten der Relais zum Abtrennen respektive Verbinden der Lampenelektroden mit verschiedenen Anschlüssen geschieht natürlich nur in den Fällen, in welchen das Relais nicht ohnehin schon in der richtigen Stellung ist.

Da die Vorheizung zwar einige Bauelemente mit dem Sperrwandler gemeinsam hat, aber ansonsten über eigene Schaltungselemente verfügt, kann sie in Abhängigkeit der Lampe und/oder der Batteriespannung kontrolliert bzw. optimiert gesteuert werden.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Grundsätzlich sind in den Figuren gleiche Teile mit gleichen Bezugszeichen versehen. Es zeigen jeweils schematisch:
- Figur 1: einen Eintakt-Sperrwandler gemäss dem Stand der Technik;
- Figur 2: einen Eintakt-Sperrwandler mit einer Vorheizung gemäss dem Stand der Technik; und
- Figuren 3-5: Schaltungen gemäss verschiedenen Ausführungsformen der Erfindung.

### WEGE ZUR AUSFÜHRUNG DER ERFINDUNG

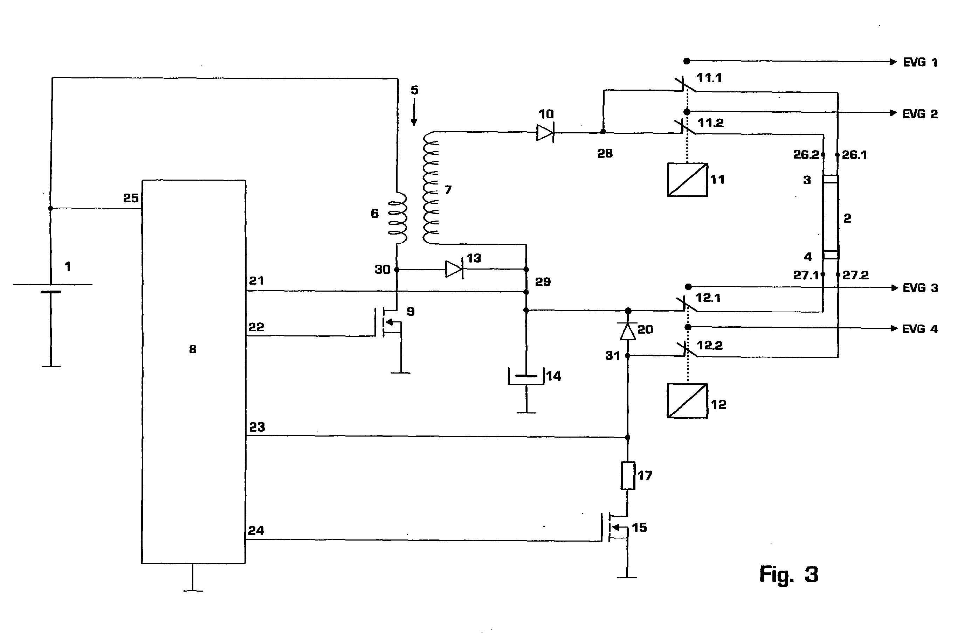

**Figur 3** zeigt eine bevorzugte Ausführungsform einer elektronischen Schaltung eines Sperrwandlers mit einer Vorheizung gemäss der Erfindung. Der Sperrwandler weist auf:
- einen induktiven Wandler 5 mit einer Primärseite 6 und einer Sekundärseite 7;
- einen Schalttransistor 9. Dieser Transistor ist als in den Figuren als Mosfet gezeichnet, kann aber auch mit anderen Halbleitertechnologien realisiert werden.
- eine Diode 10. Unter gewissen Umständen ist es möglich, auf diese Diode zu verzichten, da das Leuchtmittel den Stromfluss blockieren kann, auch wenn der Transistor T leitet. Die Diode ist nötig, wenn das Leuchtmittel-Spektrum sehr breit sein muss, und die kleinen Leistungen auch betrieben werden müssen.
Diese drei (oder gegebenenfalls nur zwei) Komponenten bilden die bekannte Technologie für den Eintakt-Sperrwandler, welcher schon anhand von der Figur 1 erklärt wurde.

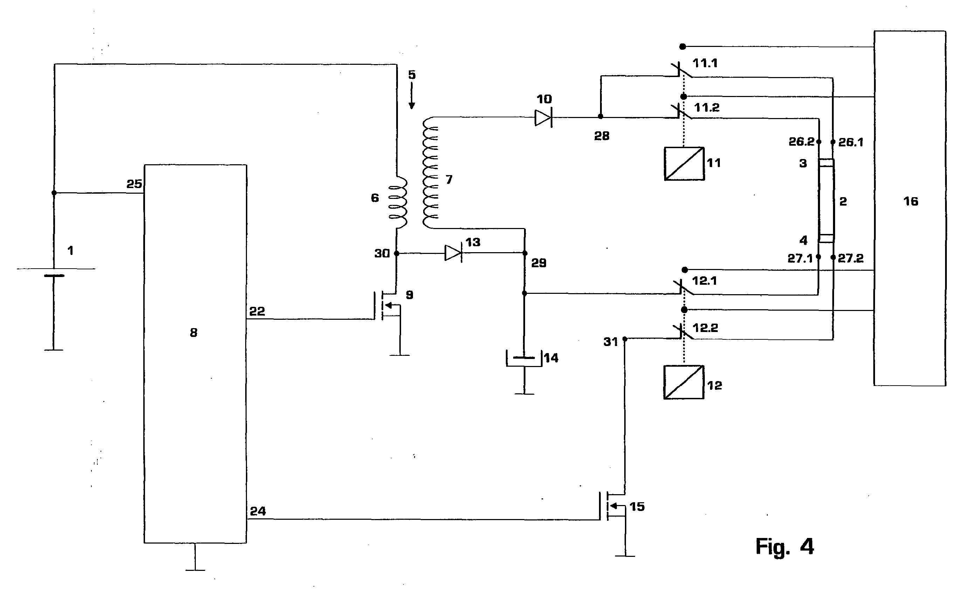

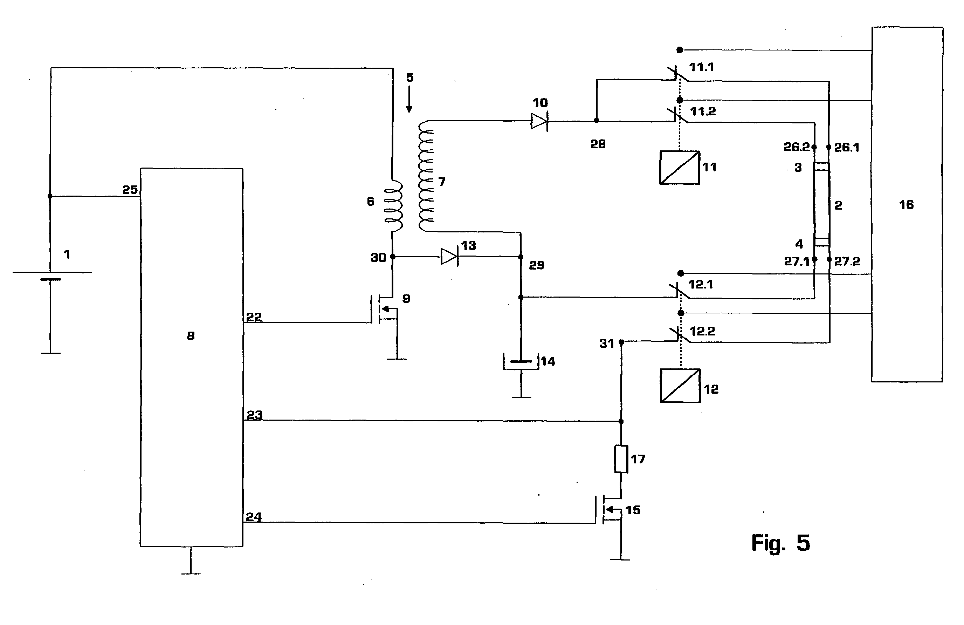

Wenn das Notelement in einer Leuchte eingebaut wird, welche in einem zusätzlichen Netzbetrieb als normale Beleuchtung verwendet werden kann, so exisitert eine sogenannte Dauerschaltung: In einem solchen Fall liegen ein erstes Umschaltrelais oder Umschaltmittel 11, mit Relaiskontakten 11.1, 11.2 und ein zweites Umschaltrelais oder Umschaltmittel 12 mit Relaiskontakten 12.1, 12.2 vor. Diese Umschaltrelais 11, 12 gewährleisten die Umschaltung der Elektroden zwischen der Notversorgung und einer normalen Versorgungsschaltung 16 (in den **Figuren 4** und **5** dargestellt) für den Netzbetrieb. Die Verbindungen zu dieser Schaltung sind in der **Figur 3** mit den mit "EVG" bezeichneten Pfeilen dargestellt. Natürlich kann diese Netzschaltung 16 auch mit konventionellen Vorschaltgeräten implementiert werden.

Die Umschaltung von Not- auf Netzbetrieb und umgekehrt ist mit den beiden Relais oder Umschaltmittel 11, 12 je mit zwei Kontakten 11.1, 11.2 und 12.1, 12.2 realisiert. Die Relais 11, 12 werden durch die Steuerungseinheit 8 angesteuert. Im Notbetrieb ist der obere Anschluss 28 des Sperrwandlers (in der Regel mit der Kathode der Wandlerdiode 10) durch beide Kontakte 11.1, 11.2 des ersten Umschaltmittels mit den zwei Anschlüssen 26.1, 26.2 der ersten Elektrode 3 verbunden. Der Notbetrieb ist auch mit nur einem von beiden Anschlüssen 26.1 oder 26.2 möglich.

Der Konverter weist die folgenden zusätzlichen Komponenten auf, welche für die Vorheizung vorgesehen sind:
- eine Hochsetz-Diode 13 deren Anode mit dem Anschluss 30 der Primär-Induktivität 6 des Wandlers 5 an einem Anschluss des Schalttransistors 9 elektrisch verbunden ist, und deren Kathode elektrisch mit dem unteren Anschluss 29 des Sperrwandlers 5, 9, 10 verbunden ist;
- einen Hochsetz-Kondensator 14, welcher am unteren Anschluss 29 des Sperrwandlers angeschlossen ist und somit über die Hochsetz-Diode 13 aufladbar ist;
- einen Vorheiz-Transistor 15 (Mosfet oder andere Technologie), mit welchem ein Stromfluss aus dem Hochsetz-Kondensator 14 und durch die zweite Elektrode 3 steuerbar ist;
- optional einen Messwiderstand 17 zur Bestimmung dieses Stromflusses;
- optional eine Schutzdiode 20 zur Ableitung von Überspannungen, die auf den Leitungen zur Lampe 2 entstehen können.

**Figur 4** zeigt eine Ausführungsform der Erfindung ohne den Messwiderstand 17 und ohne die Schutzdiode 20. **Figur 5** zeigt eine Ausführungsform der Erfindung mit dem Messwiderstand 17 und ohne die Schutzdiode 20.

Während der ersten Vorheizung wird das erste Umschaltmitte oder Relais 11 angesteuert, d.h. dass die ersten Anschlüsse 26.1, 26.2 zur ersten Elektrode 3 mit den Leitern zur Netzspeisung verbunden sind. Das zweite Umschaltmittel oder Relais 12 ist nicht angesteuert, d.h. dass zweite Anschlüsse 27.1, 27.2 zur zweiten Elektrode 4 mit der Vorheizschaltung verbunden sind, und zwar:
- ein erster der zweiten Anschlüsse 27.1 mit der Kathode der Hochsetz-Diode 13; und
- ein zweiter der zweiten Anschlüsse 27.2 mit einem Steueranschluss 31.

Der Steueranschluss ist beispielsweise direkt über den Vorheiz-Transistor 15 oder über eine Serieschaltung des Vorheiz-Transistors 15 mit dem Messwiderstand 17 mit einer Referenzspannung wie der Masse verbunden.

Der Wandler 5 bildet auf der Sekundär-Seite 7 einen offenen Kreis, weil er nicht mit der ersten Elektrode 3 verbunden ist, wenn das erste Umschaltmitte oder Relais 11 angesteuert ist. In diesem Fall bilden die Primär-Wicklung 6 des Wandlers 5 (mit der Induktivität Lp) der Schalttransistor 9, die Hochsetz-Diode 13 und der Hochsetz-Kondensator 14 einen klassischen Hochsetzer, der eine Spannung auf dem Hochsetz-Kondensator 14 erzeugen kann, welche höher als die Batteriespannung wird. Um diese Spannung zu erzeugen kann der Schalttransistor 9 beispielsweise mit einer pulsbreitenmodulierten (PWM) Ansteuerung gesteuert werden. Alternativ kann auch eine andere Art der Ansteuerung wie beispielsweise eine pulsfrequenzmodulierte Ansteuerung verwendet werden.

Die Vorheizung erfolgt durch Ansteuerung des Vorheiz-Transistors 15. Wenn dieser Vorheiz-Transistor 15 angesteuert wird, fliesst ein Strom durch die zweite Elektrode 4 und wird diese Elektrode 4 aufgrund ihres elektrischen Widerstands aufgeheizt.

Die optionale Schutzdiode 20 ist zwischen den Anschlüssen 27.1, 27.2 der zweiten Elektrode 4 angeordnet, insbesondere zwischen dem unteren Anschluss 29 des Sperrwandlers und dem Steueranschluss 31, und bildet einen Schutz für den Vorheiz-Transistor 15 gegen Überspannungen, wenn die Lampenleitungen eine sehr hohe Induktivität bilden würden. Die Schutzdiode 20 kann mit der Anode auch direkt mit dem Drain des Vorheiz-Transistors 15 verbunden werden.

Mit dem optionalen Messwiderstand 17 kann in einer bevorzugten Ausführungsfbrm der Erfindung der Widerstand der zweiten Elektrode 4 gemessen werden. Dementsprechend kann die Leistung der Vorheizung an die Leistung der Lampe 2 angepasst werden.

Es ist einer anderen bevorzugten Ausführungsform der Erfindung auch möglich, ohne die Schutzdiode 20 und mit einem Kurzschluss anstelle des Messwiderstands 17 eine Vorheizung zu erzeugen bzw. regeln. Die Leistung der Vorheizung ist dann konstant, und nicht von der Lampenleistung abhängig.

Nach der ersten Vorheizung werden das erste Relais 11 und der Vorheiz-Transistor 15 abgeschaltet. Durch die Relaiskontakte 11.1, 11.2 des ersten Relais 11 wird die erste Elektrode 3 der Lampe 2 mit dem oberen Anschluss 28 des Konverters verbunden. Mit dem Wandler 5, dem Schalttransistor 9 und der optionalen Wandlerdiode 10 kann die Fluoreszenz-Lampe in üblicher Weise gezündet und betrieben werden.

Die Steuerung der Transistoren und Relais, und die zeitliche Abfolge der Steuerbefehle wird durch die Steuerungseinheit 8 kontrolliert. Dabei findet vorzugsweise der folgende Ablauf statt:

Wenn die Fluoreszenz-Lampe 2 gezündet werden muss. d.h. im Notbetrieb oder im Testbetrieb, werden zuerst die beiden Relais 11, 12 wie folgt geschaltet.
- das erste Relais 11 bleibt oder wird angesteuert. Durch die seine beiden Kontakte 11.1, 11.2 ist die erste Elektrode 2 mit der normalen, netzbasierten Speisung 16 (EVG-1 und EVG-2 in **Figur 3**).
- das zweite Relais 12 bleibt nicht angesteuert oder wird nicht angesteuert. Durch seine beiden Kontakte 12.1, 12.2 ist die zweite Elektrode 4 von der normalen, netzbasierten Speisung 16 getrennt (EVG-3 und EVG-4 in **Figur 3**).
Da beide Kontakte des ersten Relais 11 offen sind, gibt es keinen Weg für den Strom, auf der Sekundär-Seite 7 des Wandlers 5 zu fliessen. Beim Einschalten des Schalttransistors 9, fliesst ein Strom aus der Batterie 1 in die Primär-Induktivität Lp der Primärwicklung 6. Beim Ausschalten des Schalttransistors 9 fliesst der Strom aus der Primär-Induktivität Lp durch die Hochsetz-Diode 13 in den Hochsetz-Kondensator 14. Die Energie wird somit zuerst in der Induktivität Lp, dann im Hochsetz-Kondensator 14 gespeichert.

Beim Einschalten des Vorheiz-Transistors 15, fliesst ein Vorheizstrom aus dem Kondensator C in die Elektrode E2 und erzeugt damit die Erwärmung der Elektrode E2. Diese wird dadurch vorgeheizt. Der Vorheizstrom ist also durch den Vorheiz-Transistor 15 steuerbar, das heisst schaltbar oder regulierbar.

Die Steuerung S erzeugt ein PWM-Signal auf einer ersten Steuerleitung 22 um den Schalttransistor 9 zu steuern, und ein Dauersignal einer zweiten Steuerleitung 24, um den Vorheiz-Transistor 15 einzuschalten. Das PWM-Signal ist mit seiner Frequenz und mit der Dauer t, währenddessen der Schalttransistor 9 eingeschaltet ist, definiert. Mit dem PWM-Signal ist es möglich, die aus der Batterie entzogene Leistung zu regeln.

Bei jedem Schaltzyklus ist die in der Primär-Induktivität Lp gespeicherte Energie E, solange Lp nicht gesättigt ist, nur von der Batteriespannung Vb und von der Dauer t abhängig. Die Energie E hat den Wert Vb²·t²/2Lp. Somit beträgt die aus der Batterie entzogene Leistung f Vb²·t²/2Lp, wobei f die Frequenz des PWM-Signals ist.

Beim Einschalten des Vorheiz-Transistors 15 wird diese Leistung in Wärme in der zweiten Elektrode 4 und im Messwiderstand 17 umgewandelt und verteilt. Ist der Messwiderstand 17 kurzgeschlossen (R2=0), so fliesst die gesamte Leistung als Vorheizung in die zweite Elektrode 4. Ausserdem ist diese aus der Batterie 1 entzogene Leistung unabhängig vom Widerstandswert der zweiten Elektrode 4. Es ist dadurch möglich, eine konstante Vorheizung zu erzeugen. Das PWM-Signal wird nur in Abhängigkeit der Batteriespannung von der Steuerung 8 geregelt oder berechnet. Zum Beispiel kann die Vorheizung mit einem Wert von 8W und einer Dauer von 250ms vorgegeben werden, unabhängig vom Lampentyp.

Wenn der Messwiderstand 17 nicht kurzgeschlossen ist (R2 nicht null), ist die die Spannung über dem Messwiderstand 17 mit einer Messleitung 23 abzugreifen und zu messen. Der Messwiderstand 17 wird also vom Vorheizstrom durchflossen, welcher Vorheizstrom vom unteren Anschluss 29 des Sperrwandlers durch das zweite Relais, die zweite Elektrode 4 und den Vorheiz-Transistor 17 fliesst. Aus der Spannung über dem Messwiderstand 17 kann der Widerstand der zweiten Elektrode 4 berechnet, und die Vorheizung dementsprechend geregelt werden. Alternativ zum Messwiderstand 17 können auch andere Bauelemente zur Strommessung verwendet werden, beispielsweise Hallsensoren.

Der Messwiderstand 17 und der Vorheiz-Transistor 15 können in einer anderen Ausführungsform der Erfindung auch gegeneinander vertauscht werden, das heisst, dass der Widerstand R2 zwischen der Source des Vorheiz-Transistors 15 und der Nullspannung verbunden ist.

Die Steuerung 8 überprüft vorzugsweise über eine Messleitung 21 dauernd die Spannung über dem Hochsetz-Kondensator 14. Wenn diese Spannung zu hoch wird, wird vorzugsweise die gepulste Ansteuerung des Schalttransistors 9 unterbrochen. Dies kann beispielsweise notwendig sein, wenn die Leitungen zur zweiten Elektrode 4 unterbrochen sind, oder wenn die Fluoreszenz-Lampe 2 defekt oder gar nicht vorhanden ist.

## Patentansprüche

1. Elektronische Schaltung zum Speisen einer Fluoreszenz-Lampe (2) in einer Notleuchte, wobei die Schaltung aufweist:
• einen Eintakt-Sperrwandler (5, 9, 10) zur Versorgung der Fluoreszenz-Lampe (2) mit Energie aus einer Batterie (1), welcher Eintakt-Sperrwandler (5, 9, 10) einen Schalttransistor (9), einen Wandler (5) und eine optionale Wandlerdiode (10) aufweist;
• Umschaltmittel (11, 12) zur schaltbaren Verbindung von Elektroden der Fluoreszenz-Lampe (2) mit Anschlüssen einer netzbetriebenen Speiseschaltung (16) zur Versorgung der Fluoreszenz-Lampe (2) und **dadurch** zur Umschaltung zwischen einem Netzbetrieb und einem Notbetrieb der Fluoreszenz-Lampe (2);
• mindestens einen ersten Anschluss (26.1, 26.2) zur elektrischen Verbindung mit einer ersten Elektrode (3) der Fluoreszenz-Lampe (2), welcher mindestens eine Anschluss (26.1, 26.2) über ein erstes der Umschaltmittel (11) elektrisch mit einem oberen Anschluss (28) des Sperrwandlers (5, 9, 10) verbindbar ist;
• ein Paar von zweiten Anschlüssen (27.1, 27.2) zur elektrischen Verbindung mit einer zweiten Elektrode (4) der Fluoreszenz-Lampe (2), wobei einer der zweiten Anschlüsse (27.1, 27.2) über ein zweites der Umschaltmittel (12) elektrisch mit einem unteren Anschluss (29) des Sperrwandlers (5, 9, 10) verbindbar ist;
• eine Vorheiz-Schaltung zum Vorheizen einer der Elektroden der Fluoreszenz-Lampe;
**dadurch gekennzeichnet, dass** die Vorheiz-Schaltung aufweist
• einen Hochsetz-Kondensator (14), welcher am unteren Anschluss (29) des Sperrwandlers angeschlossen ist;
• eine Hochsetz-Diode (13), deren Anode mit dem Anschluss (30) einer Primär-Induktivität (6) des Wandlers (5) an einem Anschluss des Schalttransistors (9) elektrisch verbunden ist, und deren Kathode elektrisch mit dem unteren Anschluss (29) des Sperrwandlers (5, 9, 10) verbunden ist;
• einen Vorheiz-Transistor (15), mit welchem
in einer oder mehreren Vorheizphasen,
in welchen Vorheizphasen ein erster der zweiten Anschlüsse (27.1) durch das zweite Umschaltmittel (12) elektrisch mit einem unteren Anschluss (29) des Sperrwandlers (5, 9, 10) und ein zweiter der zweiten Anschlüsse (27.2) durch das zweite Umschaltmittel (12) elektrisch mit einem Steueranschluss (31) verbunden ist,
ein Aufheizstrom, der vom unteren Anschluss (29) des Sperrwandlers (5, 9, 10) durch die zweite Elektrode (4) und durch den Steueranschluss (31) fliesst, steuerbar ist,
• eine Steuerungseinheit (8) zur Ansteuerung des Schalttransistors (9) und des Vorheiz-Transistors (15).

2. Elektronische Schaltung gemäss Anspruch 1, wobei eine erste Messleitung (21) zwischen dem unteren Anschluss (29) des Sperrwandlers (5, 9, 10) und der Steuerungseinheit (8) angeordnet ist, und die Steuerungseinheit (8) zur Messung der Spannung am unteren Anschluss (29) des Sperrwandlers (5, 9, 10) und zur Ansteuerung des Schalttransistors (9) nach Massgabe dieser Spannung ausgebildet ist.

3. Elektronische Schaltung gemäss einem der bisherigen Ansprüche, wobei ein Messwiderstand (17) in den Pfad des Aufheizstromes geschaltet ist, und die Steuerungseinheit (8) zur Messung einer Spannung über dem Messwiderstand (17) ausgebildet ist.

4. Elektronische Schaltung gemäss Anspruch 3, wobei die Steuerungseinheit (8) eine weitere Messleitung (25) zur Messung einer Batteriespannung aufweist und zur Messung der Batteriespannung und zur Regelung einer an die zweite Elektrode (4) übertragenen Leistung nach Massgabe der Batteriespannung sowie der Spannung über dem Messwiderstand (17) ausgebildet ist.

5. Elektronische Schaltung gemäss einem der bisherigen Ansprüche, wobei eine Schutzdiode (20) zwischen dem unteren Anschluss (29) des Sperrwandlers (5, 9, 10) und dem Steueranschluss (31) geschaltet ist, wobei insbesondere die Anode der Schutzdiode (20) mit dem Steueranschluss (31) verbunden ist.

6. Verfahren zum Vorheizen einer Fluoreszenz-Lampe in einer Notleuchte, mittels einer elektronischen Schaltung nach einem der vorangehenden Ansprüche, aufweisend die folgenden Schritte:
• Abtrennen, falls die Verbindung nicht bereits abgetrennt ist, mittels des ersten Umschaltmittels (11), der ersten Elektrode (3) vom oberen Anschluss (28) des Sperrwandlers (5, 9, 10);
• Verbinden, falls die Verbindung nicht bereits vorhanden ist, mittels des zweiten Umschaltmittels (12), des ersten der zweiten Anschlüsse (27.1) mit dem unteren Anschluss (29) des Sperrwandlers (5, 9, 10) und des zweiten der zweiten Anschlüsse (27.2) mit dem Steueranschluss (31);
• Erzeugen einer Spannung am unteren Anschluss (29) des Sperrwandlers (5, 9, 10) und Aufladen des Hochsetz-Kondensators (14) durch Ein- und Ausschalten des Schalttransistors (9);
• Entladen des Hochsetz-Kondensators (14) und Aufheizen der zweiten Elektrode (4) durch den resultierenden Aufheizstrom durch Einschalten des Vorheiz-Transistors (15).

7. Verfahren gemäss Anspruch 6 in Abhängigkeit von Anspruch 2, aufweisend den Schritt:
• Messen der Spannung am unteren Anschluss (29) des Sperrwandlers (5, 9, 10) und Ansteuerung des Schalttransistors (9) nach Massgabe dieser Spannung, zur Begrenzung der Spannung am unteren Anschluss (29) des Sperrwandlers (5, 9, 10).

8. Verfahren gemäss Anspruch 6 oder 7 in Abhängigkeit von Anspruch 4, aufweisend den Schritt:
• Messen der Batteriespannung und Messung eines durch die zweite Elektrode (4) fliessenden Stromes, und Regelung der an die zweite Elektrode (4) übertragenen Leistung nach Massgabe dieser beiden Messungen.

9. Verfahren zum Vorheizen einer Fluoreszenz-Lampe in einer Notleuchte, mittels einer elektronische Schaltung gemäss einem der Ansprüche 1 bis 5, aufweisend die folgende Schritte
• Verbinden, falls die Verbindung nicht bereits vorhanden ist, mittels des ersten Umschaltmittels (11), der ersten Elektrode (3) mit dem oberen Anschluss (28) des Sperrwandlers (5, 9, 10);
• Verbinden, falls die Verbindung nicht bereits vorhanden ist, mittels des zweiten Umschaltmittels (11), der ersten der zweiten Anschlüsse (27.1) mit dem unteren Anschluss (29) des Sperrwandlers (5, 9, 10) und des zweiten der zweiten Anschlüsse (27.2) mit dem Steueranschluss (31);
• Zünden der Fluoreszenz-Lampe (2) und Aufladen des Hochsetz-Kondensators (14) durch Ein- und Ausschalten des Schalttransistors (9);
• Entladen des Hochsetz-Kondensators (14) und Aufheizen der zweiten Elektrode (4) durch den resultierenden Aufheizstrom durch Einschalten des Vorheiz-Transistors (15) kurz vor dem Abschalten des Schalttransistors (9) und durch Abschalten des Vorheiz-Transistors (15) kurz nach dem Abschalten des Schalttransistors (9).
